# EUROPEAN PATENT SPECIFICATION

(11) **EP 0 273 318 B1**
(45) Date of publication and mention of the grant of the patent: **10.03.1993**
(21) Application number: 87118847.0
(22) Date of filing: 18.12.1987
(51) Int. Cl.: G11B 15/67, G11B 15/61

(54) **A device for loading a tape-like substance**
Einrichtung zur Ladung von einem bandförmigen Gegenstand
Appareil de chargement pour tout type de bande

(30) Priority: 26.12.1986 JP 310266/86; 26.12.1986 JP 310268/86; 24.01.1987 JP 8895/87 U
(43) Date of publication of application: 06.07.1988
(73) Proprietor: SONY CORPORATION, Tokyo 141 (JP)
(72) Inventor: Fujiwara, Jiro, Shinagawa-ku Tokyo (JP); Sugiyama, Yoshiaki, Shinagawa-ku Tokyo (JP); Chino, Hisayoshi, Shinagawa-ku Tokyo (JP); Ohishi, Hiroaki, Shinagawa-ku Tokyo (JP)
(74) Representative: Schmidt-Evers, Jürgen, Dipl.-Ing.

(56) References cited:
- EP-A- 0 143 536
- DE-A- 3 214 272
- DE-A- 3 434 095
- GB-A- 1 483 129
- US-A- 4 448 369
- US-A- 4 620 678
- PATENT ABSTRACTS OF JAPAN, vol. 5, no. 52 (P-56)(724), 11 April 1981, & JP-A 56 7261
- IBM TECHNICAL DISCLOSURE BULLETIN, vol. 17, no. 3, August 1974, pages 646,647, Armonk, NY, USA; P.J. ARSENEAULT et al.: "Pneumatic threading and take-up spool"

## Description

This invention relates generally to a tape recording and/or reproducing apparatus, and more particularly is directed to a device thereof for loading a tape-like substance, in which the tape-like substance, such as tape, film or the like, is conveyed with air through a duct as a tape path. The device of this invention is best suited for an open reel tape recording and/or reproducing apparatus.

### Description of the Prior Art

In relation to a tape recording and/or reproducing apparatus, various devices for loading a tape-like substance are already known in which the tape-like substance is automatically conveyed with air from a supply reel side to a take-up reel side through a predetermined tape path.

In the disclosures of US Patent No. 3 127 120, US Patent No. 3 134 527 and US Patent No. 4 243 186, the device for loading a tape-like substance, also has a duct used as a tape path between a supply reel and a take-up reel, and the end portion of the tape-like substance is conveyed toward the take-up reel with air which flows toward a take-up reel side through the duct, so that the tape-like substance is automatically loaded.

JP-A-56-7261 discloses a device for loading a tape in a VTR which comprises a tape path between the supply reel and the take-up reel which is provided with air outlets for conveying the tape by an air stream passing along said tape path. The tape supply conduit which guides the magnetic tape, and the tape take-up side conduit are arranged adjacently through a partition wall where a small hole for an auxiliary air stream is provided.

However, in such a device, it is difficult to smoothly convey the tape-like substance, unless not only the air duct but also the periphery of the reels are airtightly covered, and so as to satisfy the airtight condition, the air duct becomes complicated and large, so that the device sometimes becomes larger than the important part of the apparatus, that is, the recording and/or reproducing device. Moreover, if the periphery of the tape reel is airtightly covered, it becomes difficult to mount and demount the tape reel.

On the contrary, if the airtight condition is lowered to make the apparatus compact, a powerful blower becomes necessary, so that it is difficult to make the apparatus compact from the larger viewpoint, and further, electric power consumption increases.

Incidentally, there are, for example, other prior arts mentioned below. Desclosed in U.S. Pat. No.3,863,863 is a device in which a take-up reel is arranged under a supply reel to make a tape fall down of itself so as to lighten the role of air flow. Moreover, Disclosed in U.S. Pat. No.3,334,831 is a device in which an air stream is made between a tape and a tape guide surface to make the tape suspend in the air so that the airtight condition can be lowered.

However, used in the devices cited in the above references are simple stationary heads, so that it is difficult to use these devices as a device having a rotary head, which often makes the tape path complicated.

### OBJECTS AND SUMMARY OF THE INVENTION

Accordingly, it is an object of the present invention to provide a device for loading a tape-like substance, in which a tape path arranged below a supply reel and take-up reel is formed in zigzag in right to left direction, and air is blown off along the lower wall of the tape path, so that the tape-like substance is firmly and easily conveyed even if a weak blower, in other words, a small blower is used, and thereby, it is easy to make the device smaller and lighter, and reduce electric power consumption. Moreover, the tape path disposed in zigzag makes the most of the space which lies below the supply reel and take-up reel, and thereby, it is easy to make a whole height of the tape path small, in order to make the device extremely compact.

Another object of the invention is to provide a device for loading a tape-like substance, in which the tape-like substance conveyed with air along the lower wall of a tape path, is guided by a guide fence which projects from an end of the lower wall at the side of a front cover provided to close the open side of the tape path, so that the tape-like substance is prevented from unexpectedly entering a gap formed by the front cover, and smoothly and firmly conveyed with air along the tape path. Moreover, the guide fence is formed integrally with members forming the tape path, such as a front panel of the apparatus, so that it is easy to make the construction of the device simple, and cheapen the cost of the device.

A further object of the invention is to provide a device for loading a tape-like substance, in which the tape-like substance is firmly led along a tape lead, which is formed in the periphery of a guide drum, under the guidance of a drum fence while conveyed with air along the peripheral tape path on the guide drum, so that the tape-like substance does not run off even when the cassette in which the tape-like substance is accommodated, inclines. As the result, when recording or reproducing of the tape-like substance is thereafter performed, the tape-like substance is prevented from such a fatal accident as to be diverted from the tape lead. The tape-like substance runs accurately along the tape lead, and desired recording or reproducing is performed with high accuracy. Moreover, the tape-like substance is also prevented from receiving damage.

Still a further object of the invention is to provide a device for loading a tape-like substance, in which a magnetic shield plate is moved to a first position which is spaced apart from magnetic heads and to a second position which is adjacent to the magnetic heads: when the tape-like substance is conveyed with air, the magnetic shield plate is located in the first position, lest the magnetic shield plate should interfere with conveyance of the tape-like substance, and so as to function as a part of the tape path which guides the air flowing through it, so that the tape-like substance can be smoothly conveyed with the air; and when recording or reproducing of the tape-like substance is performed, the magnetic shield plate is located in the second position to shield the magnetic heads, so that noiseless recording or reproducing is performed with high accuracy by the enough shielded magnetic heads.

Still another object of the invention is to provide a device for loading a tape-like substance, in which a magnetic shield plate is moved to a position spaced largely apart from magnetic heads at the time of cleaning thereof, in order to make maintenance easy, so that it is easy to do, for example, such works as to clean the tape-like substance, erase magnetism from the tape-like substance, adjust the tape-like substance, mark the tape-like substance at the time of compiling the tape-like substance. As the result, efficiency of the works is much improved.

These aims are achieved by a device as specified in the independent claim. Further developments of the inventive device are disclosed in the dependent claims.

The above and other objects, features and advantages of this invention, will be apparent from the following detailed description of an illustrative embodiment which is to be read in connection with the accompanying drawings.

### BRIEF DESCRIPTION OF THE DRAWINGS

Figure 1 is a general, front view of a device for loading a tape-like substance according to an embodiment of this invention;
Figure 2 is a general, perspective view of the device of Figure 1;
Figure 3 is a partial, front view of a tape path appearing on Figure 1;
Figure 4 is a block diagram to show the action of a tape recording and/or reproducing apparatus to which the device is applied, as a sensor transmits an impulse;
Figure 5 is a sectional view, on an enlarged scale, of the tape path of Figure 3;
Figure 6 is a plan view of a peripheral path of the tape path extending along the periphery of a guide drum;
Figure 7 is a sectional view taken along the line VII-VII on Figure 6;
Figure 8 is a partial, sectional view, on an enlarged scale, of the peripheral path appearing on Figure 7;
Figure 9 is a front view of a magnetic shield plate;
Figures 10A to 10C are sectional views to show the movement of the magnetic shield plate of Figure 9; and
Figure 11 is a perspective view of a shield plate transfer mechanism for moving the magnetic shield plate.

### DETAILED DESCRIPTION OF THE PREFERRED EMBODIMENT

An embodiment of the present invention that is applied to a device for loading a tape-like substance for an open-reel-type video tape recorder will be described below with reference to the accompanying drawings.

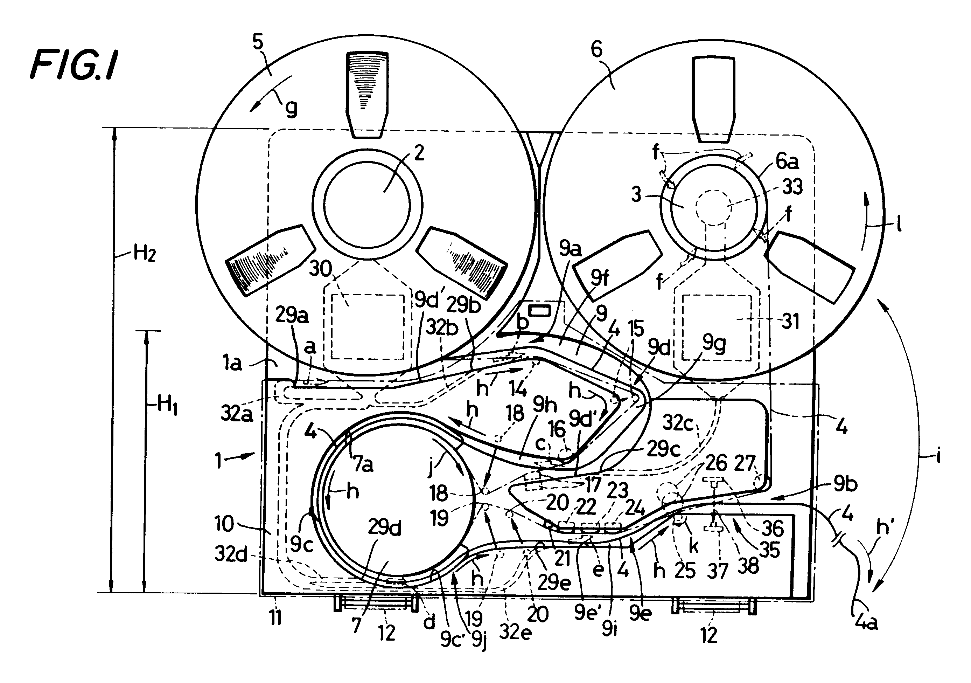

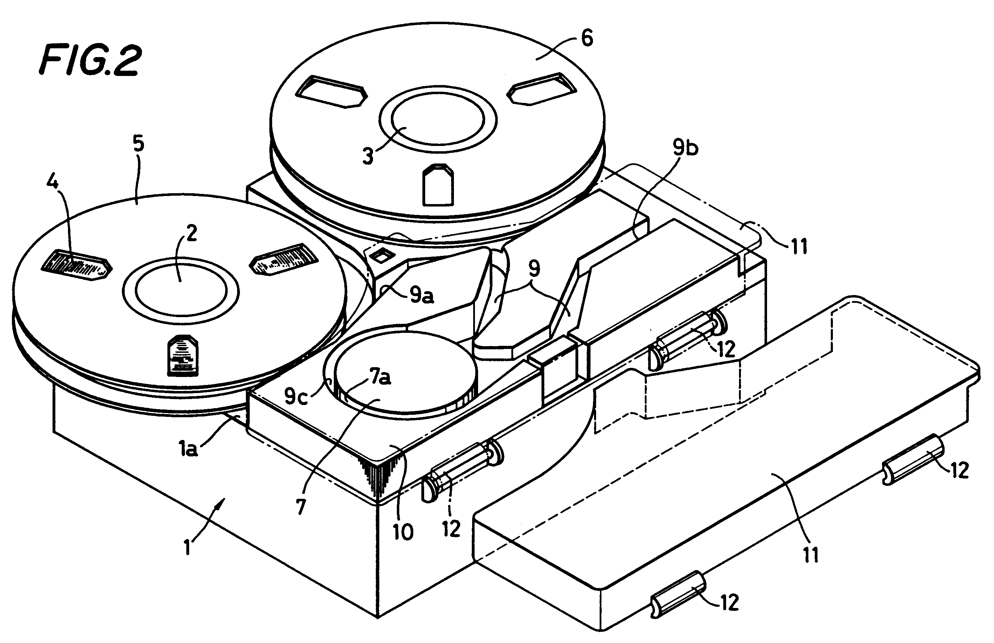

First, as shown in Figs. 1 and 2, a supply reel base 2 and a take-up reel base 3 are arranged to be spaced apart from each other at the upper right and left sides of a front surface 1a of a vertical-type video tape recorder main body 1 (to be referred to sipmly as a VTR main body hereinafter). A supply reel 5 around which a magnetic tape 4 is wound and a take-up reel 6 for taking up the magnetic tape 4, are mounted on the supply and take-up reel bases 2 and 3, respectively. A rotary head drum 7 as a guide drum is arranged on the front surface 1a of the VTR main body 1 in a position near under the supply reel 5.

A tape path 9 is formed in the front surface 1a of the VTR main body 1 in a position near below the reels 5 and 6. An inlet 9a of the tape path 9 is defined near the supply reel 5 and an outlet 9b thereof is near the take-up reel 6 with a predetermined interval to the suppy reel 6. The tape path 9 has a peripheral path 9c extending along the periphery 7a of the rotary head drum 7. Note that a supply side path 9d from the inlet 9a to the peripheral path 9c has a first horizontal portion 9f which extends substantially horizontally from the inlet 9a to a first turning point 9g and a second horizontal portion 9h which extends substantially horizontally from the first turning point 9g to the peripheral path 9c. A take-up side path 9e from the peripheral path 9c including the second turning point to the outlet 9b has a third horizontal portion 9i which extends substantially horizontally toward the outlet 9b. Therefore, the tape path exhibits a moderate Z-shaped curve as a whole. The tape path 9 is formed like a duct with the front surface 1a, a front panel 10 secured to the front surface 1a of the VTR main body 1, and an openable front cover 11 for covering the front panel 10. Note that the front cover 11 is made of transparent synthetic resin or the like and rotatably mounted on the VTR main body 1 with hinges 12. When the front cover 11 is closed as indicated by alternate long and dashed lines in Figs. 1 and 2, the front cover 11 is locked by a locking means (not shown). Note that so as to make the magnetic tape 4 wind helicallly around the periphery 7a of the rotary head drum 7, the tape path 9 is moderately inclined such that the inlet 9a is lower in height than the outlet 9b, so that a step is provided between the supply reel 5 and the take-up reel 6.

As shown in Fig. 1, a guide post 14, a tension detector 15, a guide roller 16, a full-width erasing head 17, an entrance guide 18, and the like are arranged along the supply side path 9d of the tape path 9. An exit guide 19, a tape guide 20, an impedance roller 21, an audio erasing head 22, an audio recording/reproducing head 23, an audio monitoring head 24, a capstan 25, a pinch roller 26, a guide roller 27, and the like are arranged along the take-up side path 9e of the tape path 9.

A plurality of air outlets 29a to 29e (not including 29c) and an air opening 29c are provided along the tape path 9, and connected to one or a more (two in the embodiment) blowers 30 and 31 through respective air paths 32a to 32e. Moreover, the air inlet 33 to the blower 31 is connected to many suction ports (not shown) through an air path (not shown). By an air suction force of the blower 31, the leading end of the magnetic tape 4 is wound around the periphery of the hub 6a and sucked thereon.

A sensor 35 is arranged near the outlet 9b of the tape path 9. The sensor 35 is a photosensor consisting of a light-emitting element 36 and a light-receiving element 37 which are arranged at both sides of the tape path 9, respectively. Detecting light 38 emitted by the light-emitting element 36 so as to cross the tape path 9, is received by the light-receiving element 37.

A loading operation of the magnetic tape 4 will be described below.

As Shown in Fig. 1, when the blowers 30 and 31 are put in action, air is blown off from the air outlets 29a to 29e into the tape path 9 in directions indicated by arrows a to e. Note that by air sucked in the air suction port 33 of the blower 31, air is sucked in the hub 6a from the outside to the inside as indicated by arrows f.

After a leading end 4a of the magnetic tape 4 wound around the supply reel 5 is brought to the inlet 9a of the tape path 9, the supply reel 5 is manually or automatically rotated in a direction of arrow g to pay out the magnetic tape 4.

Then, as shown by a solid line in Fig. 1, the magnetic tape 4 is conveyed from the inlet 9a to the outlet 9b in a direction of arrow h, in turn, through the supply side path 9d, the peripheral path 9c, and the take-up side path 9e of the tape path 9 with air blown off in directions of arrows a to e.

When the leading end 4a of the magnetic tape 4 is conveyed to the outlet 9b, the leadig end 4a interrupts the detecting light 38 from the light-emitting element 36, so that the light-receiving element 37 is switched to a non-light-receiving state, and the leading end 4a of the magnetic tape 4, is detected by the sensor 35.

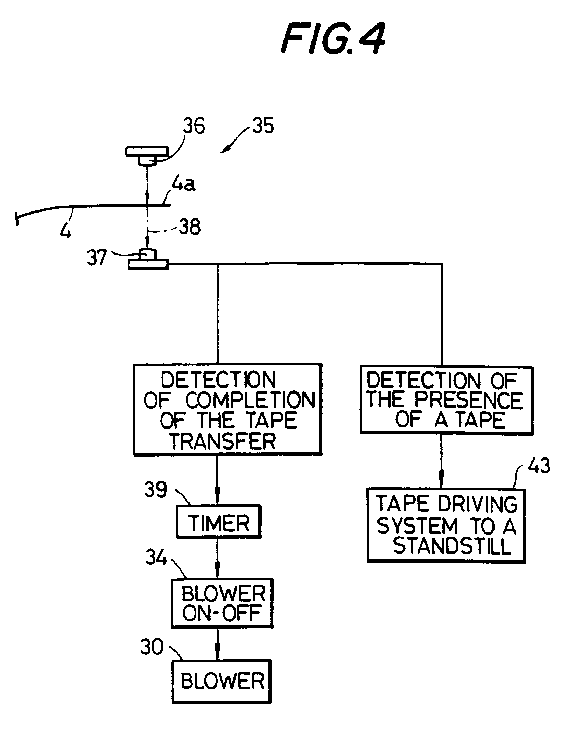

Thus, a timer 39 starts as shown in Fig. 4, and as soon as a predetermined time set by the timer 39 has passed, the blower 30 is automatically stopped by a signal from a blower ON/OFF circuit 34.

During the predetermined time set by the timer 39 (actually, including a short time period of an inertial rotation time of a motor of the blower 30 after a power source is disconnected from the motor), the leading end 4a of the magnetic tape 4 is sent out of the tape path 9 from the outlet 9b thereof by a predetermined length in a direction of arrow h'. Then, as the blower 30 is stopped, air blown off from the air outlets 29a to 29e into the tape path 9 stops, and conveyance of the magnetic tape 4 with air is finished. Note that if the supply reel 5 is manually rotated in the direction of arrow g, it needs to end the manual operation at the time when the blower 30 stops, and if the supply reel 5 is automatically rotated, it is designed to automatically stop at the time when the blower 30 stops.

As indicated by alternate long and dashed lines in Fig. 1, the leading end 4a of the magnetic tape 4 is then manually picked up and drawn in a direction of arrow i to be wound on the periphery of the hub 6a of the take-up reel 6, as sucked by an air suction force of the blower 31. When the leading end 4a of the magnetic tape 4 is firmly fixed to the periphery of the hub 6a, the blower 31 is stopped.

Note that the leading end 4a of the magnetic tape 4 is not always fixed to the periphery of the hub 6a by suction as mentioned above. For example, the leading end 4a may be inserted into slits provided in the hub 6a, or it may be fixed with other various fixing means.

Thus, the loading operation of the magnetic tape 4 is completely finished and thereafter, when a standby button is depressed, the rotary head drum 7 is rotated in the direction of arrow j. Then, movable members such as the tension detector 15, the full-width erasing head 17, the entrance guide 18, the exit guide 19, and the tape guide 20 are respectively moved from inactive positions indicated by dotted lines to active positions indicated by alternate long and dashed lines. Therefore, as indicated by alternate long and dashed lines, the magnetic tape 4 is wound helically around the periphery 7a of the rotary head drum 7 at a predetermined winding angle, and then, guided by the respective heads and guides.

When a play button is depressed, the capstan 25 is rotated in the direction of arrow k as shown in Fig. 1. Then, the magnetic tape 4 is pressed against the capstan 25 by the pinch roller 26, and at the same time, the supply reel 5 and take-up reel 6 are rotated in the directions of arrows g and ℓ, respectively. Therefore, the magnetic tape 4 runs at constant speed through the tape path 9 in the direction indicated by arrow h, and desired recording or reproducing is performed.

Note that during recording or reproducing, or during a fast-forward or rewinding operation, if the magnetic tape 4 is unexpectedly cut, or if the magnetic tape 4 is completely taken up by the take-up reel 6 or supply reel 5, the light-receiving element 37 of the sensor 35 is switched again to a light-receiving state receiving the detecting light 38 from the light-emitting element 36. As the result, with a determination that the magnetic tape 4 is not present in the tape path 9, a tape drive system stopping circuit 43 is, for example, operated as shown in Fig. 4, and a tape runnign system for the magnetic tape 4 and the rotary head drum 7 are automatically stopped.

In the loading device, the plurality of air outlets 29a to 29e are provided so as to blow off air along respective lower walls (facing upwards) 9cʹ, 9dʹ, and 9eʹ of the peripheral path 9c, supply side path 9d and take-up side path 9e of the tape path 9 which is crooked in zigzag in right to left direction.

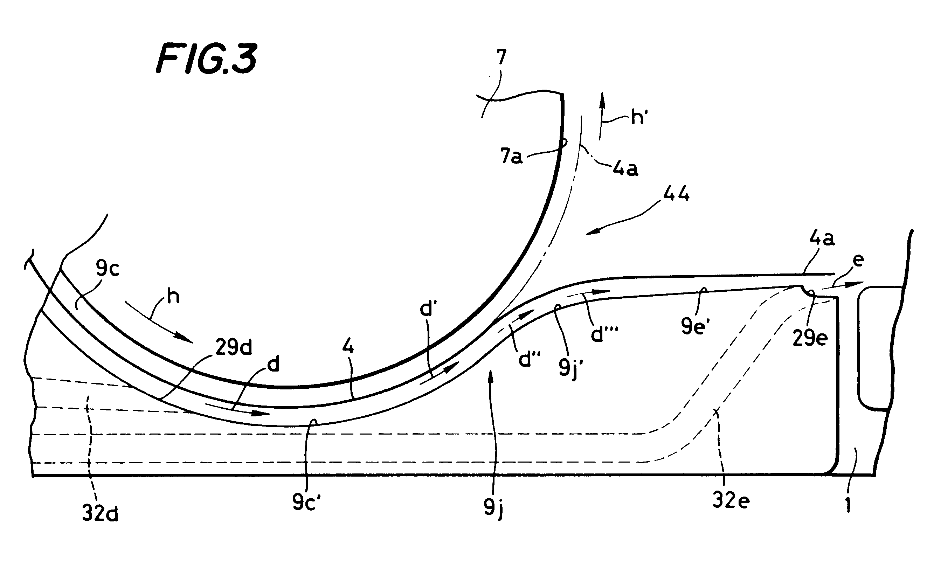

As a result, air blown off from the air outlets 29a to 29e in the directions of arrows a to e reliably flows along the lower walls 9cʹ and 9eʹ as shown in Fig. 3 and the magnetic tape 4 is reliably floated over the lower walls 9cʹ and 9eʹ and conveyed. Thus, the magnetic tape 4 is easily conveyed with air even if the blowers 30 and 31 are not powerful.

In Fig. 3 showing a connecting portion 9j between the peripheral path 9c and the take-up side path 9e, a lower wall 9jʹ of the connecting portion 9j is curved so as to be gradually separated from the peripheral 7a of the rotary head drum 7 toward the take-up side path 9e.

As a result, by the Coanda effect (such an effect that a jet stream flowing along a wall surface tends to flow close to the wall surface even if the surface is curved), air blown off from the air outlet 29d of the peripheral path 9c along the lower wall 9cʹ in the direction of arrow d, flows along the lower wall 9jʹ of the connecting portion 9j as indicated by arrows dʹ, dʺ, and d‴, so that the leading end 4a of the magnetic tape 4 is reliably conveyed along the low wall 9jʹ in accordace with the air flow of arrow dʹ, dʺ, and d‴.

Therefore, the leading end 4a of the magnetic tape 4 is conveyed as indicated by solid lines in Fig. 3 along the peripheral path 9c in the direction of arrow h, and not wound on the periphery 7a of the rotary head drum 7 as shown by an arrow hʹ, or as indicated by alternate long and dashed lines. That is, the leading end 4a of the magnetic tape 4 is smoothly and reliably conveyed from the peripheral path 9c to the take-up side path 9e.

Thus, a large space 44 is formed near entrance and exit portions of the peripheral path 9c as shown in Fig. 1, so that the rotary head drum 7 is, for example, easily cleaned due to the presence of the space 44.

According to the above loading device, the tape path 9 which is crooked in zigzag in right to left direction as shown in Fig. 1 effectively utilizes a space below the supply reel 5 and take-up reel 6, so that it is easy to make a height H1 of the tape path 9 very small, so that height H2 of the VTR main body 1 also becomes very small.

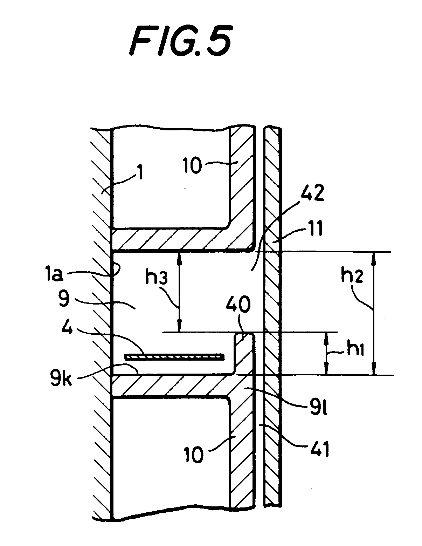

Moreover, in the VTR mamin body 1, guide fences 40 are provided as shown in Fig. 5, along an edge 9 of the lower wall 9k of the tape path 9 at the side of the front cover 11. Note that these guide fences 40 are formed integrally with the front panel 10 which is made of synthetic resin or the like.

When the magnetic tape 4 is conveyed with air along the lower wall 9k of the tape path 9, the front-cover-side edge of the magnetic tape 4 is guided by the guide fences 40, so that such a trouble as to have the magnetic tape 4 unexpectedly dropped into a gap 41 formed between the front cover 11 and the front panel 10, is prevented. Therefore, the magnetic tape 4 is smoothly and firmly conveyed with air along the tape path 9.

In this case, as shown in Fig. 5, height h1 of the guide fences 40 is properly set with respect to height h2 of a front side of the tape path 9. As a result, when a user opens the front cover 11 and manually guides the magnetic tape 4 along the tape path 9, he or she easily inserts the magnetic tape 4 from an opening 42 having a sufficiently large opening height h3 above the guide fences 40 and thereby can easily perform a guiding operation of the magnetic tape 4.

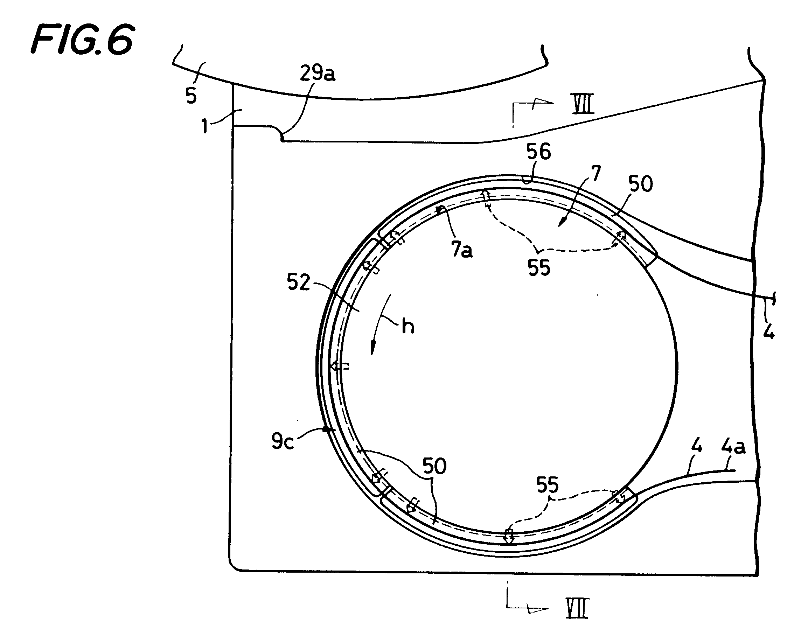

In addition, in this loading device, a drum fence 50 is provided along the periphery 7a of the rotary head drum 7 as a guide drum, as shown in Figs. 6 to 8.

A lower drum of the rotary head drum 7 is a stationary drum 51, and an upper drum thereof is a rotary drum 52. A plurality of video heads (rotary heads) 53 are mounted on the periphery of the rotary drum 52. A tape lead 54 is formed helically on a the periphery of the stationary drum 51. The drum fence 50 is mounted on the periphery of the stationary drum 51 to project within the peripheral path 9c, and a surface of the drum fence 50 extends in such a height that is the same as, or a little lower than that of the tape lead 54. Note that in the embodiment, the drum fence 50 is divided into a several portions along the periphery of the stationary drum 51 and fixed thereon with screws 55. In this case, if the entire drum fence 50 is formed of a single member, the number of screws 55 can be reduced.

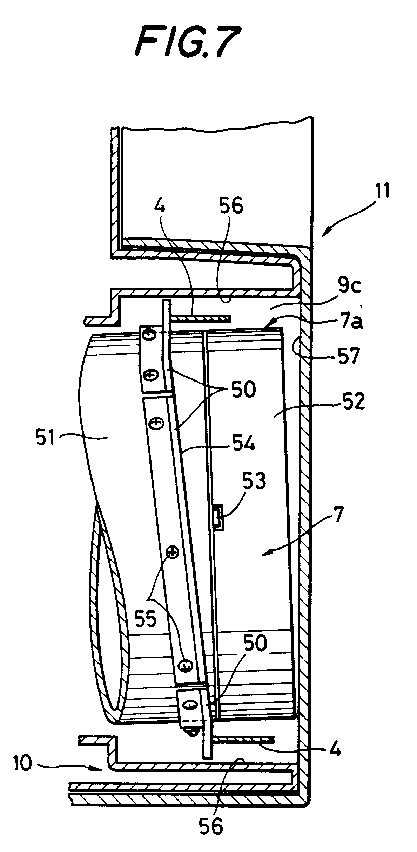

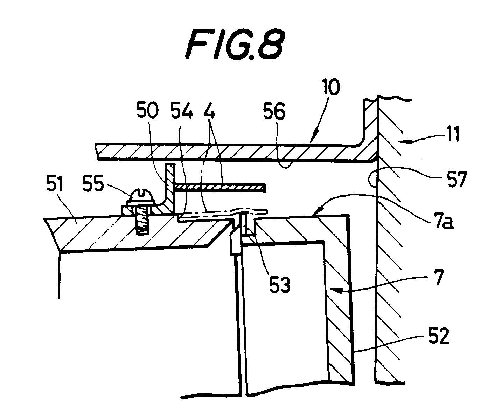

As a result, as shown in Figs. 7 and 8, the peripheral path 9c is surrounded by the periphery 7a of the rotary head drum 7, a wall 56 of the front panel 10 facing to the periphery 7a, the drum fence 50, and a wall 57 of the front cover 11 facing to the drum fence 50, so that even if the VTR main body 1 is set vertically, or inclined 10 to 20 degrees during conveyance of the magnetic tape 4 with air through the peripheral path 9c in the direction of arrow h in Fig. 1, the magnetic tape 4 is firmly and helically conveyed on the periphery 7a of the rotary head drum 7 along the tape lead 54 by the help of the drum fence 50.

Therefore, when recording or reproducing is performed after loading of the magnetic tape 4, the magnetic tape 4 is reliably transferred from a position on the drum fence 50 indicated by solid lines to a position on the tape lead 54 indicated by alternate long and dashed lines in Fig. 8. As a result, the magnetic tape 4 runs accurately along the tape lead 54 without derailing, so that recording or reproducing of a video signal can be performed with high precision by a video head 53.

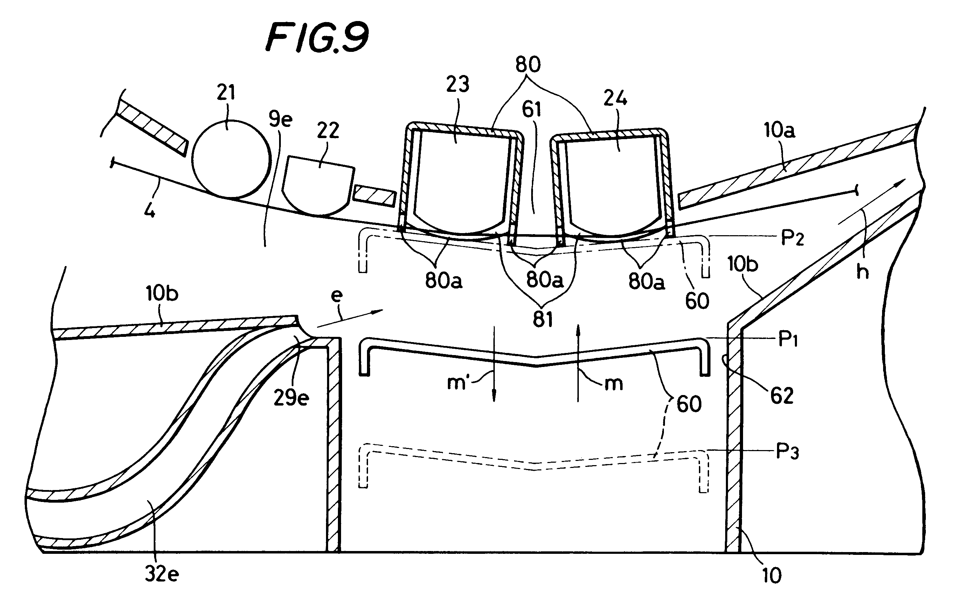

Next, a magnetic shield plate and a shield plate transfer mechanism will be hereinafter described with reference to Figs. 9 to 11.

Two of the audio recording/reproducing head 23 and the audio monitoring head 24 (to be referred to simply as magnetic heads 23 and 24 hereinafter) on the take-up side path 9e of the tape path 9 are magnetically shielded by a single elongated magnetic shield plate 60. In this case, the magnetic heads 23 and 24 facing downwards are arranged close to each other, and placed within a notch 61 formed in an upper wall 10a of the take-up side path 9e provided in the front panel 10. The magnetic shield plate 60 is substantially horizontally arranged in a notch 62 formed in a lower wall 10b, so as to function as a part of the lower guide wall 10b.

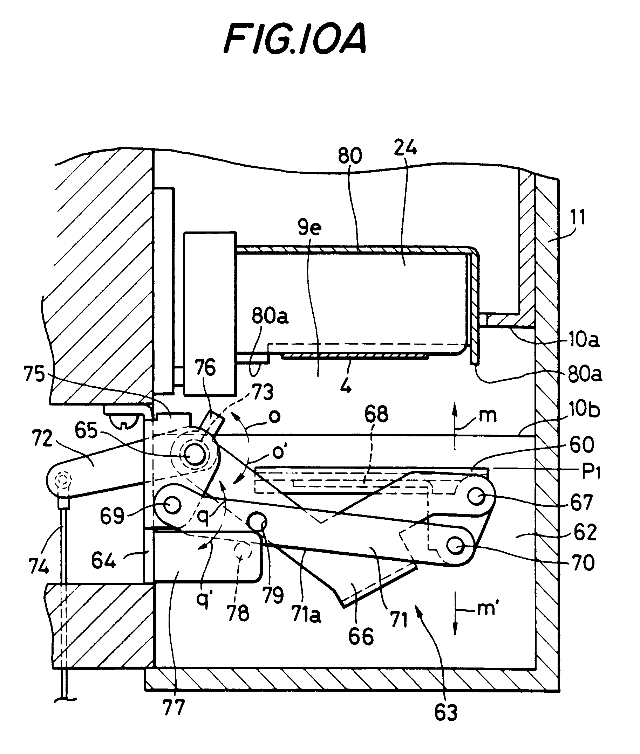

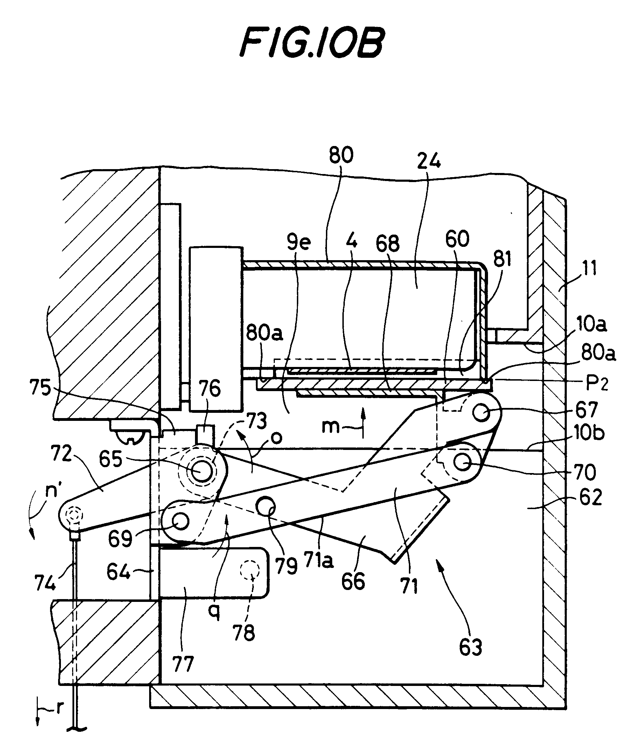

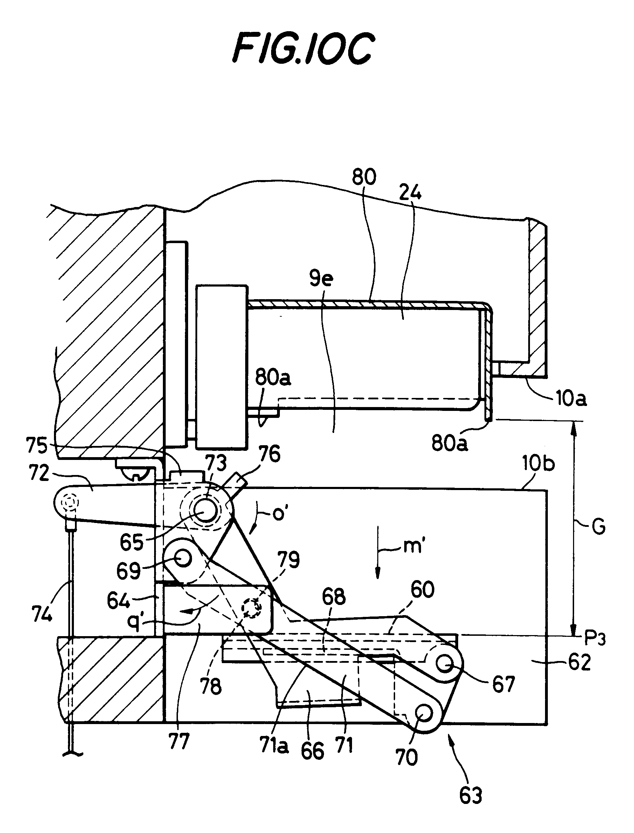

The magnetic shield plate 60 is movable in directions of arrows m and mʹ by a shield plate transwer mechanism 63, whereby the magnetic shield plate 60 can approach to the magnetic heads 23 and 24, or retreat from the neighborhood of the magnetic heads 23 and 24. The magnetic shield plate 60 is located in three positions: a first position P1 (separated from the magnetic heads 23 and 24 substantially by a distance which corresponds to the height of the take-up side path 9e), which is indicated by solid lines in Fig. 9 and also shown in Fig. 10A; a second position P2 (close to the magnetic heads 23 and 24), which is indicated by alternate long and dashed lines in Fig. 9 and also shown in Fig. 10B; and a third position P3 (separated from the magnetic heads 23 and 24 by a distance larger than that of the first position P1), which is indicated by dotted lines in Fig. 9 and also shown in Fig. 10C.

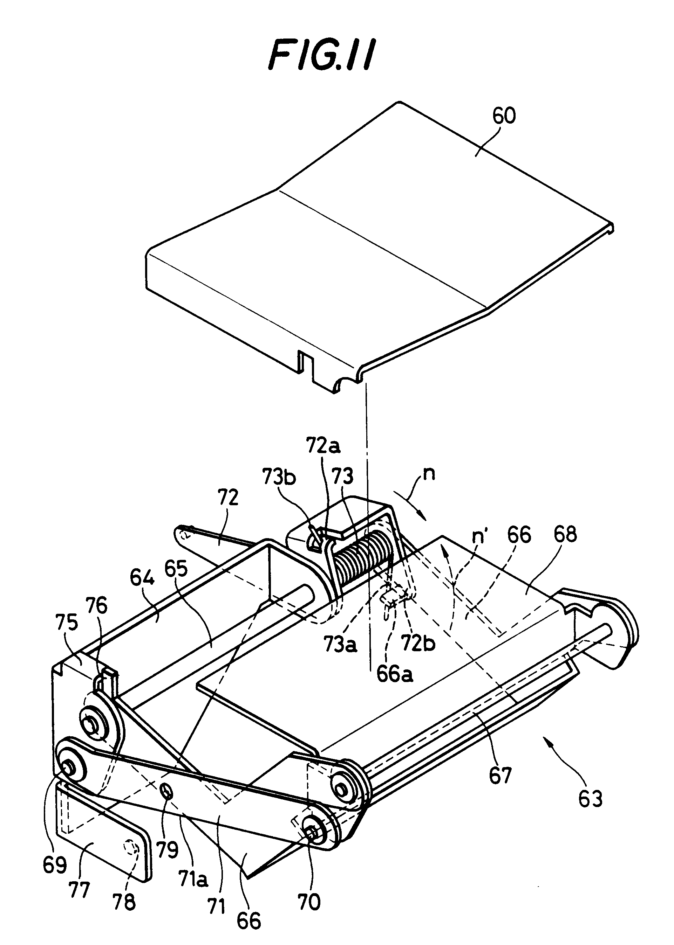

The shield plate transfer mechanism 63 has a parallel motion mechanism to make the magnetic shield plate 60 move in parallel to the first position P1, the second position P2, or the thrid position P3. That is, as shown in Fig. 11, the shield plate transfer mechanism 63 comprises: a substantially U-shaped first link 66 which is pivotally mounted on a mounting plate 64 secured to the VTR main body 1, through a pivot shaft 65; a moving plate 68 which is pivotally mounted on free end portions of the first link 66, through a pivot shaft 67 which is parallel to the pivot shaft 65; and a second link 71 which are connected at one end to the mounting plate 64 through a pivot shaft 69 provided in the moving plate 64 below the pivot shaft 65, and at the other end, connected to the moving plate 68 through a pivot shaft 70 provided in the mounting plate 68 below the pivot shaft 67. The first and second links 66 and 71 constitute a parallel motion mechanism. The magnetic shield plate 60 is elastically supported on the moving plate 68 through a leaf spring (not shown) or the like. A drive lever 72 pivotally mounted on the pivot shaft 65 is coupled to the first link 66 through a limitter spring 73. Note that the limitter spring 73 is made of a coiled torsion spring, and its ends 73a and 73b are locked by spring locking portions 66a and 72a with respect to the first link 66 and the drive lever 72, respectively. Due to the function of the limitter spring 73, the first link 66 and the drive lever 72 are pivoted in directions n and nʹ of Fig. 11, respectively, and after a spring locking portion 66a of the first link 66 abuts against a stopper 72b of the drive lever 72, mutual rotation in the directions n and nʹ is prohibited. In this case, as shown in Fig. 10A, the drive lever 72 is interlocked with movable members such as the entrance and exit guides 18 and 19 of Fig. 1 through an interlocking member 74 made of wire or the like. Note that as shown in Fig. 10A, a stopper 75 is provided at an upper end of one of end portions of the mounting plate 64, and when a projection 76 of the first link 66 abuts against the stopper 75, rotation of the first link 66 about the pivot shaft 65 in a direction of arrow o in Fig. 10A is prohibited. In addition, a cone-shaped stopper 78 projects from a leaf spring 77 fixed to a lower end of one end portion of the mounting plate 64, and when a lower edge 71a of the second link 71 abuts against the stopper 78, rotation of the second link 71 about the pivot shaft 69 in a direction of arrow qʹ in Fig. 10A is prohibited. Moreover, there is provided an engaging hole 79 in the second link 71, and if the second link 71 is moved against the force of the leaft spring 77, the engaging hole 79 can be engaged with the stopper 78. Note that each of the magnetic heads 23 and 24 is covered with a magnetic shield case 80 except a lower side which serves as the front face thereof.

An operation of the magnetic shield plate 60 will be described below.

When the magnetic tape 4 is to be loaded as described above, the magnetic shield plate 60 is located in the first position P1 indicated by solid lines in Fig. 9 and also shown in Fig. 10A. At that time, the lower edge 71a of the second link 71 abuts against the stopper 78 of the leaf spring 77 due to the tare of the members. During the loading, the magnetic shield plate 60 is located below the magnetic heads 23 so as to be separated from the magnetic heads substantially by a distance corresponding to the height of the take-up side path 9e. Therefore, the magnetic shield plate 60 does not only interfere with conveyance of the magnetic tape 4 but also effectively guides air blown off especially from the air outlet 29e in the direction of arrow e. As a result, air can smoothly flow through the take-up side path 9e, and thereby, the magnetic tape 4 is made to be smoothly conveyed along the take-up side path 9e in the direction of arrow h.

When the standby button is depressed after loading of the magnetic tape 4 as mentioned before, the movable members such as the entrance and exit guides 18 and 19 are moved from the inactive position indicated by dotted lines in Fig. 1 to the active position indicated by alternate long and dashed lines therein, and in association therewith, the interlocking member 74 is pulled in a direction of arrow r as shown in Fig. 10B. Therefore, the drive lever 72 of the shield plate transfer mechanism 63 is driven in the direction of arrow nʹ, the first link 66 is pivoted about the pivot shaft 65 in the direction of arrow o through the limitter spring 73, and at the same time, the second link 71 is pivoted about the pivot shaft 69 in the direction of arrow q. As a result, by the moving plate 68, the magnetic shield plate 60 is moved in parallel to the second position P2 indicated by alternate long and dashed lines in Fig. 9 and also shown in Fig. 10B in the direction of arrow m. Note that when the projection 76 abuts against the stopper 75, rotation of the first link 66 in the direction of arrow o is prohibited. However, the magnetic shield plate 60 is elastically pressed from below against an opening end 80a which is a lower end of the magnetic shield case 80, due to the force of a leaf spring or the like interposed between the magnetic shield plate 60 and the moving plate 68. The periphery of the magnetic heads 23 and 24 are completely covered with the magnetic shield plate 60 and magnetic shield case 80 except a gap 81 formed between the magnetic heads 23 and 24 and the magnetic shield plate 60, through which the magnetic tape 4 runs.

Therefore, as described above, when the play button is thereafter depressed and the magnetic tape 4 runs in the tape path 9 in the direction of arrow h at a constant speed as indicated by alternate long and dashed lines in Fig. 1 to perform desired recording or reproducing, the magnetic heads 23 and 24 are reliably magnetically shielded, thereby performing noiseless recording or reproducing with high precision.

When the stop button is depressed after the magnetic tape 4 is recorded or reproduced, running of the magnetic tape 4 in the direction of arrow h shown in Fig. 1 is stopped, and the movable members such as the entrance and exit guides 18 and 19 are moved from the active position indicated by alternate long and dashed lines in Fig. 1 to the inactive position indicated by dotted lines therein, thereby releasing the interlocking member 74 in the direction of arrow r in Fig. 10B. Then, as shown in Fig. 10A, the first and second links 66 and 71 of the shield plate transfer mechanism 63 are swung on the pivot shafts 65 and 69 in directons indicated by arrows oʹ and qʹ due to the tare of the members, and the magnetic shield plate 60 is moved to the first position P1 in the direction of arrow mʹ.

In order to perform cleaning of the magnetic heads 23 and 24 (that means to clean head gaps and their peripheries of the magnetic heads 23 and 24), demagnetization of the magnetic head 23 and 24 (that means to demagnetize the magnetized magentic heads 23 and 24 by a magnetic eraser), adjustments of the magnetic heads 23 and 24 (that means to adjust the heights, azimuths, tilts, and like of the magnetic heads 23 and 24), and marking of the magnetic tape 4 during audio tape editing, a user puts his or her finger on the pivot shaft 67 or the first link 66 of the shield plate transfer mechanism 63 and pushes it in the direction of arrow mʹ as shown in Fig. 10C. Then, the first and second links 66 and 71 are pivoted against the limitter spring 73 about the pivot shafts 65 and 69 in the directions of arrows oʹ and qʹ, and the magnetic shield plate 60 is moved in parallel to the third position P3 indicated by dotted lines in Fig. 9 and also shown in Fig. 10C in the direction of arrow mʹ. Note that at this time, as shown in Fig. 10C, the second link 71 is inserted into a space against the elastic side surface of the leaf spring 77. Therefore, the engaging hole 79 engages with the stopper 78, and the magnetic shield plate 60 is locked at the third position P3.

As a result, the magnetic shield plate 60 is separated downwards from the magnetic heads 23 and 24 further than the first position P1, so that a large gap G is formed between the magnetic shield plate 60 and the magnetic heads 23 and 24. Therefore, the cleaning, demagnetization, or adjustment of the magnetic heads 23 and 24, or marking works of the magnetic tape 4, and the like can be easily performed duro the large gap G, and thereby, it is easy to improve working efficiency thereof.

## Claims

1. A device for loading a tape-like substance (4) having a supply reel (2) and a take-up reel (3) which are spaced apart from each other in right to left direction, and a guide drum (7) arranged under the supply reel, a path (9) from an inlet (9a) arranged near said supply reel (2) to an outlet (9b) arranged near said take-up reel (3) via the periphery of said guide drum (7), said path including a peripheral path (9c) provided along said periphery of the guide drum (7), a supply side path (9d) from said inlet (9a) to said peripheral path (9c), and a take-up side path (9e) from said peripheral path (9c) to said outlet (9b), wherein air outlets are provided along said path (9) for conveying the tape-like substance (4),
**characterized in that**
said tape path (9) comprises a first substantially horizontal path (9f) from said inlet (9a) to a first turning point (9g); a second substantially horizontal path (9h) from said first turning point (9g) to a second turning point included in that said peripheral path (9c); and a third substantially horizontal path (9i) from said second path (9c) to said outlet (9b),
and in that said device further comprises air outlets (29b, 29d, 29e) blowing off air along respective lower walls (9c', 9d' , 9e') of said peripheral path (9c), said supply side path (9d) and said take-up side path (9e) through said lower walls (9c', 9d', 9e'),
an air opening (29c) blowing off air through the lower wall (9d') of said supply side path (9d) near said peripheral path (9c) to have said tape-like substance (4) wound on said guide drum (7), and
at least one blower (30, 31) for supplying air to said air outlets (29b, 29d, 29e) and opening (29c), wherein said tape-like substance (4) paid out of said supply reel (2) is conveyed with air blown off through said respective lower walls (9c', 9d', 9e') of the path (9), and is wound on said guide drum (7) with air blown off from said air opening (29c), so that said tape-like substance (4) is conveyed from said inlet (9a) to said outlet (9b).

2. The device according to claim 1,
**characterized in that**
said tape path (9) having a U-shaped section comprising a lower wall (9k), a side wall (1a) and an upper wall, and the open side (42) of said tape path (9) is covered by an openable cover (11).

3. The device according to claim 1 or claim 2,
**characterized in that**
a guide fence (40) is provided at the end of the lower wall (9k) on said open side (42) of the tape path (9).

4. The device according to any one of claims 1 to 3
**characterized in that**
a drum fence (50) is provided protrusively on the periphery of said guide drum (7) so as to have said tape-like substance (4) guided along a tape lead which is provided on the periphery of said guide drum (7).

5. The device according to any one of claims 1 to 4,
**characterized in that**
stationary heads (22, 23, 24) are arranged in one of the upper walls (10a) or the lower walls (10b) of the tape path (9); a shield plate (60) is arranged in the other wall (10a, 10b) in opposed relation with said one wall (10b, 10a); and a shield plate transfer mechanism moves said shield plate (60) from a first position (P2) near said stationary heads (22, 23, 24) to a second position (P1) where said shield plate (60) is flush with said upper wall (10a) or said lower wall (10b), or vice versa, said tape-like substance (4) being moved by said shield plate (60), and then sandwiched between said stationary heads (22, 23, 24) and said shield plate (60) in said first position (P2) when in use, so that said stationary heads (22, 23, 24) are shielded by said shield plate (60), and when said shield plate (60) is located in said second position (P1), said shield plate (60) acting as the part of said upper or lower wall (10a, 10b).

6. The device according to claim 5,
**characterized in that**
said shield plate (60) transfer mechanism moves said shield plate (60) to not only said first and second positions (P1, P2), but also to a third position (P3) where said shield plate (60) is spaced most apart from said stationary heads (22, 23, 24) for easy maintenance.

7. The device according to claim 5 or 6,
**characterized in that**
said stationary heads (22, 23, 24) and said shield plate (60) are disposed in said take-up side path (9e).

8. The device according to any one of claims 1 to 7,
**characterized in that**
said blower (31) sucks air through an inlet (33) opened in a face of said take-up reel (3) on which said tape-like substance (4) is wound.

9. The device according to any one of claims 1 to 8,
**characterized in that**
said air outlets comprise at least a first air outlet (29b) provided in said first horizontal path (9f) near said inlet (9a) of the tape path (9); a second air outlet (29d) provided in said peripheral path (9c) near the lowest portion thereof; and a third air outlet (29e) provided in said third horizontal path (9e), and said air opening (29c) is provided in said second horizontal path (9h).

10. The device according to any one of claims 1 to 9,
**characterized in that**
a tape tension detector (15) is provided at said first turning point (9g).

## Patentansprüche

1. Einrichtung zum Laden von bandartigem Material (4), mit:
einer Vorratsspule (2) und einem Aufnahmespule (3), die in Rechts-links-Richtung voneinander beabstandet sind und einer Führungstrommel (7), die unter der Vorratsspule angeordnet ist,
einem Förderpfad (9), von einem in der Nähe der Vorratsspule (2) angeordneten Einlaß (9a) über den Umfang der Führungstrommel (7) bis zu einem in der Nähe der Aufnahmespule (3) angeordneten Auslaß (9b), wobei der Pfad einen Umfangspfad (9c), der entlang der Führungstrommel (7) vorgesehen ist, einen Zuführ-Seitenpfad (9d), von dem Einlaß (9a) zum Umfangspfad (9c), und einem Abführ-Seitenpfad (9e), vom Umfangspfad (9c) zum Außlaß (9b) beinhaltet, wobei
entlang des Förderpfades (9) zum Befördern des bandartigen Materials (4) Luftauslaßöffnungen vorgesehen sind,
dadurch gekennzeichnet,
daß der Band-Pfad (9) vom Einlaß (9a) zum ersten Wendepunkt (9g) einen ersten im wesentlichen horizontalen Pfad (9f), vom ersten Wendepunkt (9g) zu einem zweiten Wendepunkt einen zweiten im wesentlichen horizontalen Pfad (9h), der in dem Umfangspfad (9c) enthalten ist, und von dem zweiten Förder-Pfad (9c) zum Außlaß (9b) einen dritten im wesentlichen horizontalen Pfad (9i) aufweist, und
daß die Einrichtung weiterhin aufweist Luftauslaßöffnungen (29b, 29d, 29e), die entlang jeweiliger unterer Wände (9c', 9d', 9e') des Umfangspfades (9c), des Zuführ-Seitenpfades (9d) und des Abführ-Seitenpfades (9e) Luft durch die unteren Wände (9c', 9d, 9e') ausblasen,
eine Luft-Öffnung (29c) die Luft durch die untere Wand (9d') des Zuführ-Seitenpfades (9d) in der Nähe des Umfangspfades (9c) ausbläst, um das bandartige Material (4) um die Führungstrommel (7) zu wickeln, und
zumindest ein Gebläse (30, 31), um den Luftauslaßöffnungen (29b, 29d, 29e) und der Luft-Öffnung (29c) Luft zuzuführen, wobei das von der Vorratsspule (2) abgewikkelte bandartige Material (4) mittels der durch die jeweiligen unteren Wände (9c', 9d', 9e') des Pfades (9) ausgeblasenen Luft gefördert und auf der Führungstrommel (7) durch aus der Luft-Öffnung (29c) ausgeblasenen Luft gewickelt wird, so daß das bandartige Material (4) vom Einlaß (9a) zum Auslaß (9b) gefördert wird.

2. Einrichtung nach Anspruch 1,
dadurch gekennzeichnet,
daß der Band-Pfad (9) einen U-förmigen Querschnitt aufweist, der eine untere Wand (9k), eine Seitenwand (1a) und eine obere Wand auweist, und daß die offene Seite (42) des Band-Pfades (9) von einer Abdeckvorrichtung (11) abgedeckt ist, die geöffnet werden kann.

3. Einrichtung nach Anspruch 1 oder Anspruch 2,
dadurch gekennzeichnet,
daß an der offenen Seite (42) des Band-Pfades (9) eine Führungsbegrenzung (40) am Ende der unteren Wand (9k) vorgesehen ist.

4. Einrichtung nach einem der Ansprüche 1 bis 3,
dadurch gekennzeichnet,
daß eine von dem Umfang der Führungstrommel (7) vorspringende Trommelbegrenzung (50) vorgesehen ist, um das bandartige Material (4) entlang einer Bandführung zu führen, die auf dem Umfang der Führungstrommel (7) vorgesehen ist.

5. Einrichtung nach einem der Ansprüche 1 bis 4,
dadurch gekennzeichnet,
daß stationäre Köpfe (22, 23, 24) in einer der oberen Wände (10a) oder der unteren Wänden (10b) des Bandpfades (9) vorgesehen sind,
daß eine Abschirmplatte (60) der einen Wand gegenüberliegend in der anderen Wand (10b, 10a) angeordnet ist, und
daß ein Abschirmplatten-Transportmechanismus die Abschirmplatte (60) von einer ersten Stellung (P2) in der Nähe der stationären Köpfe (22, 23, 24) in eine zweite Stellung (P1) bewegt, in der die Abschirmplatte (60) mit der oberen Wand (10a) oder mit der unteren Wand (10b) bündig ist, oder umgekehrt,
daß das bandartige Material (4) von der Abschirmplatte (60) bewegt und dann zwischen den stationären Köpfen (22, 23, 24) und der Abschirmplatte (60) im Betrieb in der ersten Stellung (P2) eingeschlossen wird, so daß die stationären Köpfe (22, 23, 24) von der Abschirmplatte (60) abgeschirmt werden, wobei dann, wenn die Abschirmplatte (60) sich in der zweiten Stellung (P1) befindet, die Abschirmplatte (60) als Teil der oberen oder der unteren Wand (10a, 10b) wirkt.

6. Einrichtung nach Anspruch 5,
dadurch gekennzeichnet,
daß der Abschirmplatten (60)-Transportmechanismus die Abschirmplatte (60) nicht nur in die erste und in die zweite Stellung (P1, P2) bewegt, sondern auch in eine dritte Stellung (P3), in der die Abschirmplatte (60) für einfache Wartungsarbeiten von den stationären Köpfen (22, 23, 24) am weitesten beabstandet ist.

7. Einrichtung nach Anspruch 5 oder 6,
dadurch gekennzeichnet,
daß die stationären Köpfe (22, 23, 24) und die Abschirmplatte (60) in dem Abführ-Seitenpfad (9e) angeordnet sind.

8. Einrichtung nach einem der Ansprüche 1 bis 7,
dadurch gekennzeichnet,
daß das Gebläse (31) durch den Einlaß (33) Luft einsaugt, der in einer der Stirnseiten der Aufnahmespule (3) geöffnet ist, auf das das bandartige Material (4) gewickelt ist.

9. Einrichtung nach einem der Ansprüche 1 bis 8,
dadurch gekennzeichnet,
daß die Luftauslaßöffnungen zumindest einen ersten Luftauslaß (29b), der in dem ersten horizontalen Pfad (9f) in der Nähe des Einlaßes (9a) des Band-Pfades (9) vorgesehen ist, einen zweiten Luftauslaß (29d), der in dem Umfangspfad (9c) in der Nähe dessen untersten Bereiches vorgesehen ist, und einen dritten Luftauslaß (29e) aufweisen, der in dem dritten horizontalen Pfad (9e) vorgesehen ist, und
daß die Luft-Öffnung (29c) in dem zweiten horizontalen Pfad (9h) vorgesehen ist.

10. Einrichtung nach einem der Ansprüche 1 bis 9,
dadurch gekennzeichnet,
daß ein Bandspannungs-Detektor (15) an dem ersten Wendepunkt (9g) vorgesehen ist.

## Revendications

1. Dispositif de chargement d'un élément en forme de bande (4) ayant une bobine d'alimentation (2) et une bobine de réception (3) qui sont espacées l'une de l'autre de la droite vers la gauche, et un tambour de guidage (7) disposé sous la bobine d'alimentation, un passage (9) depuis une entrée (9a) disposée à proximité de ladite bobine d'alimentation (2) jusqu'à une sortie (9b) disposée à proximité de ladite bobine de réception (3) en passant par la périphérie dudit tambour de guidage (7), ledit passage comprenant un passage périphérique (9c) prévu le long de ladite périphérie du tambour de guidage (7), un passage du côté alimentation (9d) depuis ladite entrée (9a) jusqu'au dit passage périphérique (9c), et un passage du côté réception (9e) depuis ledit passage périphérique (9c) jusqu'à ladite sortie (9b), des sorties sortie d'air étant prévues le long dudit passage (9) afin de transporter l'élément en forme de bande (4), caractérisé en ce que ledit passage de bande (9) comporte un premier passage sensiblement horizontal (9f) depuis ladite entrée (9a) jusqu'à un premier point de rebroussement (9g); un deuxième passage sensiblement horizontal (9h) depuis ledit premier point de rebroussement (9g) jusqu'à un deuxième point de rebroussement inclus dans ledit passage périphérique (9c); et un troisième passage sensiblement horizontal (9i) depuis ledit deuxième passage (9c) jusqu'à ladite sortie (9b), et en ce que ledit dispositif comporte en outre des sorties d'air (29b, 29d, 29e) soufflant de l'air le long des parois inférieures respectives (9c', 9d', 9e') dudit passage périphérique (9c), dudit passage du côté alimentation (9d) et dudit passage du côté réception (9e) à travers lesdites parois inférieures (9c', 9d', 9e'), une ouverture d'air (29c) soufflant de l'air à travers la paroi inférieure (9d') dudit passage du côté alimentation (9d) à proximité dudit passage périphérique (9c) afin d'avoir ledit élément en forme de bande (4) enroulé sur ledit tambour de guidage (7), et au moins un ventilateur (30, 31) destiné à amener de l'air vers lesdites sorties d'air (29b, 29d, 29e) et ladite ouverture d'air (29c), ledit élément en forme de bande (4) déroulé de ladite bobine d'alimentation (2) étant transporté avec l'air soufflé à travers lesdites parois inférieures respectives (9c', 9d', 9e') du passage (9), et étant enroulé sur ledit tambour de guidage (7) avec l'air soufflé par ladite ouverture d'air (29c), de sorte que ledit élément en forme de bande (4) est transporté depuis ladite entrée (9a) jusqu'à ladite sortie (9b).

2. Dispositif selon la revendication 1, caractérisé en ce que ledit passage de bande (9) possède une section en forme de U comportant une paroi inférieure (9k), une paroi latérale (1a) et une paroi supérieure, et le côté ouvert (42) dudit passage de bande (9) est recouvert par un capot ouvrant (11).

3. Dispositif selon la revendication 1 ou la revendication 2, caractérisé en ce qu'une barrière de guidage (40) est prévue à l'extrémité de la paroi inférieure (9k) sur ledit côté ouvert (42) du passage de bande (9).

4. Dispositif selon l'une quelconque des revendications 1 à 3, caractérisé en ce qu'une barrière de tambour (50) est prévue de façon saillante sur la périphérie dudit tambour de guidage (7) de façon à avoir ledit élément en forme de bande (4) guidé le long d'un guide de bande qui est prévu sur la périphérie dudit tambour de guidage (7).

5. Dispositif selon l'une quelconque des revendications 1 à 4, caractérisé en ce que des têtes fixes (22, 23, 24) sont disposées dans une des parois supérieures (10a) ou des parois inférieures (10b) du passage de bande (9); une plaque de protection (60) est disposée dans l'autre paroi (10a, 10b) en relation opposée à ladite première paroi (10b, 10a); et un mécanisme de transfert de plaque de protection déplace ladite place de protection (60) depuis une première position (P2) à proximité desdites têtes fixes (22, 23, 24) jusqu'à une deuxième position (P1) où ladite plaque de protection (60) affleure ladite paroi supérieure (10a) ou ladite paroi inférieure (10b) et vice-versa, ledit élément en forme de bande (4) étant déplacé par ladite plaque de protection (60), et enserré ensuite par lesdites têtes fixes (22, 23, 24) et ladite plaque de protection (60) dans ladite première position (P2) lors de l'utilisation, de sorte que lesdites têtes fixes (22, 23, 24) sont protégées par ladite plaque de protection (60), et lorsque ladite plaque de protection (60) se trouve dans ladite deuxième position (P1), ladite plaque de protection (60) agit comme partie de ladite paroi supérieure ou inférieure (10a, 10b).

6. Dispositif selon la revendication 5, caractérisé en ce que ledit mécanisme de transfert de plaque de protection (60) déplace ladite plaque de protection (60) non seulement jusqu'aux dites première et deuxième positions (P1, P2), mais également jusqu'à une troisième position (P3) où ladite plaque de protection (60) est davantage espacée desdites têtes fixes (22, 23, 24) pour un entretien facile.

7. Dispositif selon la revendication 5 ou 6, caractérisé en ce que lesdites têtes fixes (22, 23, 24) et ladite plaque de protection (60) sont disposées dans ledit passage du côté réception (9e).

8. Dispositif selon l'une quelconque des revendications 1 à 7, caractérisé en ce que ledit ventilateur (31) aspire de l'air par une entrée (33) ouverte dans une face de ladite bobine de réception (3) sur laquelle ledit élément en forme de bande (4) est enroulé.

9. Dispositif selon l'une quelconque des revendications 1 à 8, caractérisé en ce que lesdites sorties d'air comportent au moins une première sortie d'air (29b) prévue dans ledit premier passage horizontal (9f) à proximité de ladite entrée (9a) du passage de bande (9); une deuxième sortie d'air (29d) prévue dans ledit passage périphérique (9c) à proximité de la partie la plus basse de celui-ci; et une troisième sortie d'air (29e) prévue dans ledit troisième passage horizontal (9e), et ladite ouverture d'air (29c) est prévue dans ledit deuxième passage horizontal (9h).

10. Dispositif selon l'une quelconque des revendications 1 à 9, caractérisé en ce qu'un détecteur de tension de bande (15) est prévu au niveau dudit premier point de rebroussement (9g).
